# EUROPÄISCHE PATENTSCHRIFT

(11) **EP 1 831 659 B1**
(45) Veröffentlichungstag und Bekanntmachung des Hinweises auf die Patenterteilung: **28.04.2010**
(21) Anmeldenummer: 05850144.6
(22) Anmeldetag: 09.12.2005
(51) Int. Cl.: G01K 5/20

(54) **THERMOMETER**
THERMOMETER
THERMOMETRE

(30) Priorität: 09.12.2004 DE 102004059534
(43) Veröffentlichungstag der Anmeldung: 12.09.2007
(73) Patentinhaber: TFA-Dostman GMBH & Co. KG, 97877 Wertheim-Reichholzheim (DE)
(72) Erfinder: KOSSLICK, Hendrik, 12524 Berlin (DE); ISEMER, Olaf-Matthias, 97877 Wertheim-Bettingen (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2005/002218
(87) Internationale Veröffentlichungsnummer: WO 2006/061008

(56) Entgegenhaltungen:
- WO-A-00/54014
- US-A- 3 469 452
- US-A- 5 215 378
- US-A1- 2003 185 279

## Beschreibung

Die Erfindung betrifft ein Thermometer nach dem Oberbegriff des Anspruchs 1.

Derartige Thermometer sind weit verbreitet und werden als kapillare Maxima-Minima-Thermometer bezeichnet. Gemäß der DE 76 31 228 U1 können diese Thermometer ein u-förmiges Kapillarrohr mit zwei Schenkeln haben, in dem eine Überträgerflüssigkeit zum Verschieben jeweils einer in den Schenkeln angeordneten Marke aufgenommen ist. Die Marken selber sind in einer thermometrischen Flüssigkeit angeordnet, die beidseits der Überträgerflüssigkeit mit dieser eine Phasengrenzfläche bildet.

Als Überträgerflüssigkeit hat sich in der Vergangenheit aufgrund seiner guten spezifischen Eigenschaften wie zum Beispiel hohen Dichte, hoher Siedepunkt, niedrigen Schmelzpunkt und stabilen Phasentrennung mit der thermometrischen Flüssigkeit Quecksilber bewährt. Nachteilig an Quecksilber ist jedoch seine Toxizität, aufgrund derer die Verwendung von Quecksilber in einigen Ländern nicht mehr erlaubt ist.

Alternative Überträgerflüssigkeiten sind zum Beispiel in der WO 00/54014 genannt. Demnach setzen sich geeignete Überträgerflüssigkeiten aus bestimmten Elementen der dritten, vierten, fünften, und sechsten Gruppe, sowie einigen Interhalogen-Verbindungen aus der siebten Gruppe des Periodensystems zusammen. Allerdings hat sich gezeigt, daß derartige Überträgerflüssigkeiten keinen zufriedenstellenden Ersatz für Quecksilber darstellen.

Aufgabe der Erfindung ist es, ein Thermometer zu schaffen, das toxikologisch unbedenklich ist und das fertigungstechnisch einfach sowie kostengünstig herzustellen ist.

Diese Aufgabe wird durch ein Thermometer mit den Merkmalen nach dem Anspruch 1 gelöst.

Erfindungsgemäß ist die Überträgerflüssigkeit eine hydrophobe hochfluorierte Verbindung. Derartige Verbindungen ermöglichen eine schnelle und stabile Phasentrennung mit der thermometrischen Flüssigkeit, so daß ein Hineinlösen von Komponenten der thermometrischen Flüssigkeit in die fluorierte Phase verhindert wird. Dabei sind besonders perfluorierte Amin-Verbindungen wie zum Beispiel Perfluor Tri n-Butylamin (FC-43) geeignet. Perfluorierte Amine wurden ursprünglich wegen ihres hohen Sauerstoffvermögens als Blutersatzstoff entwickelt. Sie gelten als toxigologisch unbedenklich und chemisch außerordentlich stabil.

Alternative perfluorierte Amin-Verbindungen können Perfluor Tri n-Pentylamin (FC70) oder Perfluor Tri n-Butylamin (FC40) bzw. Perfluor Di n-Butylmethylamin sein. Es ist jedoch auch vorstellbar, die einzelnen Verbindungen miteinander zu vermischen.

Die erfindungsgemäßen Überträgerflüssigkeiten sind zwar mit den per se bekannten thermometrischen Flüssigkeiten verwendbar, jedoch läßt sich eine noch schnellere Phasentrennung erzielen, wenn sich die thermometrische Flüssigkeit aus einer einzelnen oder aus einer Mischung der Gruppen Ethanol, Ethylenglykol, Glyzerin und/oder Wasser zusammensetzt.

Eine bevorzugte thermometrische Flüssigkeit besteht aus einer Ethanol/Glyzerinmischung mit etwa 10 Volumenprozent Glyzerin.

Eine andere bevorzugte thermometrische Flüssigkeit ist eine Ethanol/Ethylenglykolmischung mit bis zu 20 Volumenprozent Ethylenglykol.

Eine weitere bevorzugte thermometrische Flüssigkeit ist reines Ethanol.

In einer Ausführungsform ist das Thermometer mit einem u-förmigen Kapillarrohr ausgeführt. Das Kapillarrohr hat zwei Schenkel, in denen jeweils die thermometrische Flüssigkeit mit einer Marke zum Anzeigen einer maximalen und einer minimalen Temperatur aufgenommen ist. Zwischen den thermometrischen Flüssigkeitsmengen in den Schenkeln ist die Überträgerflüssigkeit angeordnet.

Sonstige vorteilhafte Ausführungsformen der Erfindung sind Gegenstand weiterer abhängigen Ansprüche.

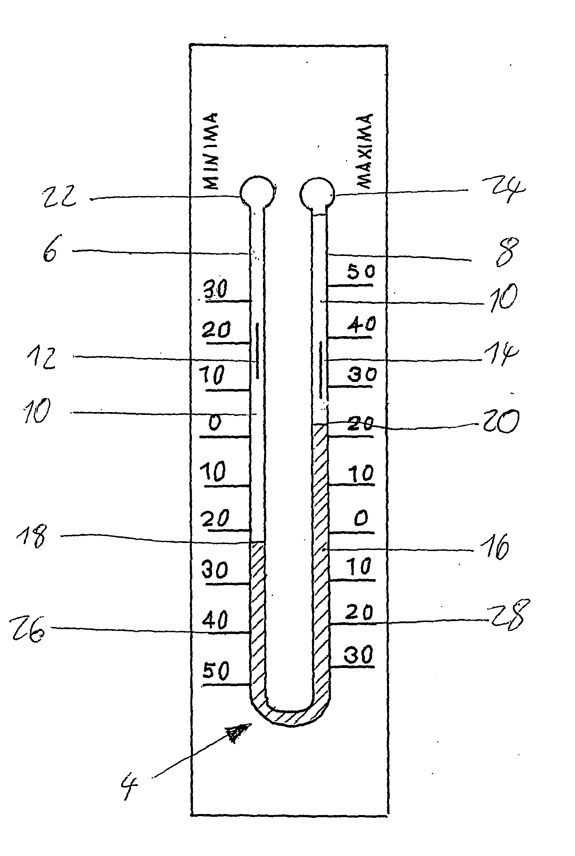

Im Folgenden erfolgt eine ausführliche Erläuterung einer bevorzugten Ausführungsform der Erfindung anhand einer schematischen Darstellung. Die einzige Figur zeigt eine Draufsicht auf ein Maxima-Minima-Thermometer mit einem u-förmigen Kapillarrohr.

Die Figur zeigt ein Maxima-Minima-Thermometer 2 mit einem Kapillarrohr 4. Das Kapillarrohr 4 ist u-förmig ausgebildet und hat einen gemäß der Darstellung linken und einen rechten Schenkel 6, 8.

In den Schenkeln 6, 8 ist jeweils eine bestimmte Menge einer thermometrischen Flüssigkeit 10 aufgenommen, in der jeweils ein Marker 12, 16 zum Anzeigen einer maximalen und einer minimalen Temperatur angeordnet ist.

Die Marker 12, 14 sind vorzugsweise blaue, stabförmige Email-Glaskörper mit einem Ferritkern. Die maximale und minimale Temperatur kann an dem gemäß der Darstellung unteren Ende der Marker 12, 14 in Kombination mit entlang der Schenkel 6,8 vorgesehenen Temperaturskalen 26, 28 abgelesen werden. Die Marker 12, 14 werden über nicht dargestellte Magnetstreifen hinter den Temperaturskalen 26, 28 in ihrer Position gehalten. Ein Lösen der Marker 12, 14, d.h. ein Zurücksetzen des Thermometers 2, erfolgt über ein rückseitiges Verschwenken des Magnetstreifens weg von dem Kapillarrohr 4, so daß die magnetische Kraft nicht mehr ausreicht, die Marker 12, 14 in ihrer fixierten Position zu halten und diese aus der Darstellung bis zu Phasengrenzfläche 18, 20 mit einer Übeträgerflüssigkeit 16 absinken.

Der linke Schenkel 6 ist endseitig von einem Vorratsbehälter 22 zur Vorhaltung der thermometrischen Flüssigkeit 10 in dem linken Schenkel 6 verschlossen. Der rechte Schenkel 8 mündet in einen Ausgleichsbehälter 26 zur Aufnahme der aus dem Schenkel 8 verdrängten thermometrischen Flüssigkeit 10.

Die thermometrischen Flüssigkeitsmengen 10 sind über die Überträgerflüssigkeit 16 voneinander getrennt. D.h. die schwere Überträgerflüssigkeit 16 wird in jedem Schenkel 6, 8 von der leichten thermometrischen Flüssigkeit 10 überschichtet. Im Berührungsbereich der Flüssigkeiten 10, 16 bilden sich Phasengrenzflächen 18, 20 derart aus, das ein Vermischen der Flüssigkeiten 10, 16 verhindert ist. Die Überträgerflüssigkeit 18 und somit die Phasengrenzflächen 18, 20 wird bzw. werden entsprechend einer Volumenänderung der thermometrischen Flüssigkeit 10 bei einer Temperaturänderung verschoben, wodurch bei einer neuen maximalen oder minimalen Temperatur die entsprechende Phasengrenzfläche 18, 20 auf den jeweiligen Marker 12, 14 aufläuft und diesen gegen die magnetische Haltekraft durch die sehr starke Oberflächenspannung der Überträgerflüssigkeit 16 mitnimmt. Die momentane, nicht maximale oder minimale Temperatur ist allgemein an der Phasengrenzfläche 18, 20 bestimmbar. Zur visuellen Verdeutlichung der Phasengrenzflächen 18, 20 ist die thermometrische Flüssigkeit 10 farblich eingefärbt.

Die Überträgerflüssigkeit 16 ist eine hydrophobe hochfluorierte Verbindung. Derartige Verbindungen können mit per se bekannten thermometrischen Flüssigkeiten verwendet werden und erfordern keine Anpassung der Dimensionierung des Kapillarrohrs 4. Sie weisen prinzipiell eine schnelle und stabile Phasentrennung auf. Zur Erhöhung der Phasentrennung sind Verbindungen mit einem hohen Fluorierungsgrad wie zum Beispiel Perfluor-Verbindungen besonders geeignet. Als besonders vorteilhaft hat sich die Verbindung Perfluor Tri n-Butylamin (FC-43) herausgestellt. Diese Flüssigkeit ist toxikologisch unbedenklich, chemisch und physikalisch außerordentlich stabil, unbrennbar und geruchsneutral. Ferner zeichnet sie sich durch eine Dichte von 1,88 g/cm³, einen hohen Siedepunkt von 174°C und einen niedrigen Schmelzpunkt von -50°C aus. Weiterhin bildet sich bei FC-43 an den Phasengrenzflächen 18, 20 eine genügend hohe Oberflächenspannung, so daß die hohe Dichte des bisher verwendeten Quecksilbers kompensiert wird.

Alternative Überträgerflüssigkeiten sind Perfluor Tri n-Pentylamin (FC-70) und Perfluor Tri n-Butylamin (FC-40), sowie Perfluor Di n-Butylmethylamin. Weiterhin sind Gemische aus den genannten Perfluor-Verbindungen vorstellbar.

Die thermometrische Flüssigkeit 10 kann eine per se bekannte thermometrische Flüssigkeit wie zum Beispiel Kreosot sein. Es hat sich jedoch zur Ausbildung einer starken Oberflächenspannung an den Phasengrenzflächen 18, 20 als besonders vorteilhaft herausgestellt, wenn die thermometrische Flüssigkeit 10 im Gegensatz zur Überträgerflüssigkeit 16 nicht starke hydrophobe, sondern starke hydrophile Eigenschaften, wie zum Beispiel Alkohol und Wasser, und ein gutes Unterlaufverhalten aufweist. Dabei kann auf die bei Quecksilber übliche Zugabe von Ascorbinsäure als Reduktionsmittel zur Verhinderung einer Oxidation der Überträgerflüssigkeit 16 verzichtet werden, da die Perfluor-Verbindungen nicht zur Oxidation neigen.

Als geeignete thermometrische Flüssigkeiten 10 haben sich Mischungen aus Ethanol, Ethylenglykol, Glyzerin und/oder Wasser herausgestellt. Derartige Mischungen sind bei Raumtemperatur niedrigviskos, wodurch eine Erhöhung der Viskosität bei niedrigen Temperaturen im wesentlichen unkritisch ist. Zur Vermeidung einer langfristigen Wechselwirkung des Wassers mit der Glasinnenfläche des Kapillarrohrs 4 oder den Markern 12, 14 sind jedoch Flüssigkeitsgemische mit geringem Wassergehalt anzustreben.

Beispielhaft sei eine Ethanol/Glyzerinmischung mit einem Glyzerinanteil von etwa 10 Volumenprozent und eine Ethanol/Ethylenglykolmischung mit einem Ethylenglykolanteil von bis zu 20 Volumenprozent genannt. Eine gesteigerte Zugabe von Glyzerin oder Ethylenglykol führt zu einem starken, negativen Anwachsen der Viskosität. Ebenfalls ist es vorstellbar, reines Ethanol zu verwenden.

Im Folgenden erfolgt eine kurze Beschreibung der zur Ermittlung der erfindungsgemäßen Überträgerflüssigkeiten 16 und thermometrischen Flüssigkeiten 10 durchgeführten Versuche.

### 1. Untersuchungen zum Mischungsverhalten von hoch- und perfluorierten Flüssigkeiten mit der Originalthermometerflüssigkeit.

Der Ersatz von Quecksilber als Überträgerflüssigkeit in Maxima-Minima-Thermometern durch ein alternatives Medium erfordert eine Reihe spezifischer Eigenschaften wie geringe Toxizität, Geruchlosigkeit, Lichtbeständigkeit, chemische Stabilität, niedriger Schmelzpunkt, hoher Siedepunkt, hohe Dichte, geringe Mischbarkeit mit der thermometrischen Flüssigkeit und vor allem die Herausbildung einer starken Oberflächenspannung an der Phasengrenzfläche beider Flüssigkeiten. Will man die thermometrische Flüssigkeit nicht grundsätzlich verändern, d. h. ein Gemisch hydrophiler Alkohole weiter verwenden, so erfüllen nur wenige hoch- bzw. perfluorierte Verbindungen die hierfür notwendigen Voraussetzungen. Unter diesen Gesichtspunkten und unter Berücksichtigung der Beschaffungskosten wurde eine Auswahl fluorierter Flüssigkeiten getroffen und in einem ersten Screening das Mischungsverhalten mit der Originalthermometerflüssigkeit in folgender einfachen Versuchsanordnung getestet.

In einem NMR - Röhrchen (4 mm ∅) werden die zu untersuchenden Flüssigkeiten mit jeweils ca. 4 cm Füllhöhe übereinander geschichtet, 30 sek. geschüttelt und anschließend das Phasentrennverhalten beobachtet. Tabelle 1 zeigt die erhaltenen Ergebnisse.

**Tabelle 1**

| Experiment | fluorierte Verbindung | Phasentrennung | Verschiebung der Phasengrenze | Dichte (g/cm3) | Kp (°C) | Stockpkt. (°C) |
|---|---|---|---|---|---|---|
| 1 | HFE - 7100 Methylnonafluorbutylether 20-80% Methylnonafluorisobutylether 20-80% | keine; klare Mischung | - | 1,5 | 61 | -138 |
| 2 | HFE - 7200 Ethylnonafluorbutylether 20-80% Ethylnonafluorisobutylether 20-80% | keine; klare Mischung | - | 1,43 | 76 | -135 |
| 3 | HFE - 1700 Methylnonafluorisobutylether 50-70% Methylnonafluorbutylether 30-50% Fluoraliphatisches Polymer 1-3% | gut; | ca. 5 mm untere Restphase | 1,43 | | |
| 4 | HFE-7500 2-trifluoromethyl-3-ethoxydodecafluorohexane | gut | Phasengrenze ca. 1 mm nach unten verschoben | 1,61 | 130 | -100 |
| 5 | Perfluordecalin | sehr gut | fast keine sichtbare Verschiebung | 1,9 | 142 | |
| 6 | FC 43 Perfluor tri n-butylamin | sehr gut | Phasengrenze <1 mm nach oben verschoben | 1,88 | 174 | -50 |
| 7 | FC 70 Perfluor tri n-pentylamin | sehr gut | Phasengrenze <1 mm nach oben verschoben | 1,93 | 215 | -25 |
| 8 | FC40 Perfluor tri n-butylamin + Perfluor di n-butylmethylamin | sehr gut | Phasengrenze ca. 1 mm nach oben verschoben | 1,87 | 155 | -57 |

Eine wesentliche Aussage der Phasentrennversuche ist, daß es prinzipiell möglich ist, mit hochfluorierten Verbindungen eine schnelle und stabile Phasentrennung aus Gemischen mit der Originalthermometerflüssigkeit zu erreichen ohne daß ein erhebliches Hineinlösen von Komponenten der Thermometerflüssigkeit in die fluorierte Phase erfolgt, wie die nur geringe Verschiebung der Phasengrenze bei einigen Versuchen zeigt. Voraussetzung hierfür ist jedoch ein sehr hoher Fluorierungsgrad der fluorierten Verbindung. Die besten Ergebnisse werden deshalb auch mit den perfluorierten Verbindungen (5-8) erhalten. Die saubere Phasentrennung der perfluorierten Flüssigkeiten von der Originalthermometerflüssigkeit zeigt weiterhin, daß mit der Originalrezeptur oder nur geringfügig veränderter Zusammensetzung von der Seite der thermometrischen Flüssigkeit, eine quecksilberfreie Lösung gefunden werden könnte, die ohne wesentliche Veränderungen an der Dimensionierung des Glaskörpers auskommt. Unter Berücksichtigung der in Tabelle 1 aufgeführten physikalischen Daten, sowie der Toxizität, Viskosität, chemischen Stabilität (siehe beigelegte Datenblätter) und der Geruchlosigkeit erscheint das perfluorierte Tri n-Butylamin (FC 43) als die am besten geeignete Verbindung. Sie ist toxikologisch unbedenklich und chemisch außerordentlich stabil. Prinzipiell sind auch Gemische aus o.g. Verbindungen einsetzbar, jedoch erscheint die Verwendung einer reinen Verbindung vorteilhafter, um eine möglichst hohe Konstanz der physikalischen und chemischen Eigenschaften zu gewährleisten.

### 2. Untersuchungen zum Laufverhalten unterschiedlicher thermometrischer Flüssigkeiten gegen Perfluor Tri n-Butylamin in noch nicht gebogenen Kapillaren.

### Versuchsablauf:

Eine Originalkapillare wurde auf ca. 25 cm Länge gekürzt, abweichend vom realen Thermometer das Thermometergefäß und der darüber liegende Abschnitt der Kapillare bis zu einer Höhe von 10-15 cm mit Perfluor Tri n-Butylamin gefüllt und anschließend der obere Kapillarteil mit dem zu untersuchenden Flüssigkeitsgemisch überschichtet. Hierbei ist darauf zu achten, daß sich an der Phasengrenze keine Luftblasen befinden. Dieser vereinfachte Versuchsaufbau spiegelt die Situation im Maxima-Minima-Thermometer bezüglich der Phasengrenzsituation korrekt wieder, da auch hier die schwerere untere Phase der Überträgerflüssigkeit von der leichteren thermometrischen Flüssigkeit überschichtet wird.

Die gefüllte Probe wurde dann auf -30 °C abgekühlt und anschließend an der Luft auf +50 °C erwärmt. Diese Prozedur wurde fünffach wiederholt, wobei die Kapillare dreimal senkrecht und zweimal waagerecht positioniert wurde. In waagerechter Position konnte die Ausbildung der Grenzflächenform und besonders das Unterlaufverhalten mit einem Auflichtmikroskop verfolgt werden. Aufbauend auf Ergebnissen einer Studie zum Ersatz von Kreosot in Maxima-Minima-Thermometern wurde das Substanzspektrum auf Ethanol, Ethylenglykol, Glyzerin und Wasser eingeschränkt. Auch für die Herausbildung starker Oberspannungseffekte an der Phasengrenzfläche zur extrem hydrophoben perfluorierten Flüssigkeit, welche in diesem System für die Mitnahme der Markerröhrchen zwingend erforderlich sind, ist die Verwendung o.g. Alkohole und Wasser mit ihren stark hydrophilen Eigenschaften besonders vorteilhaft. Da Ascorbinsäure als Reduktionsmittel zur Verhinderung der Oxidation von Quecksilber hier nicht benötigt wird und auch keine erkennbare Wirkung auf das Laufverhalten der Originalzusammensetzung erkennbar war, wurde auf den Ascorbinsäurezusatz bei den nachfolgenden Untersuchungen verzichtet. Die Stärke der Wölbung des Meniskus der Phasengrenzfläche wird als qualitatives Maß für die sich herausbildende Oberflächenspannung herangezogen (Tabelle 2).

Bei allen Untersuchungen wurde die Herausbildung einer stark bis sehr stark gewölbten Phasengrenzfläche beobachtet. Auch das Unterlaufverhalten ist meist sehr gut. Lediglich bei höheren Wassergehalten oder in reinem, relativ hochviskosem Ethylenglykol wird eine Verschlechterung sichtbar. Da bei tiefen Temperaturen eine zusätzliche Erhöhung der Viskosität zu berücksichtigen ist, sollten geeignete thermometrische Flüssigkeiten bei Raumtemperatur niedrigviskos sein. Auch bezüglich langfristiger Wechselwirkungen des Wassers mit der Glasoberfläche der Kapillare sind Flüssigkeitsgemische mit geringem Wassergehalt anzustreben. Für Viskositätsuntersuchungen wurden deshalb nur Gemische von Ethanol mit Ethylenglykol oder Glyzerin herangezogen. Eine zusätzliche Trocknung der Alkohole erfolgte bewußt nicht, um herstellungsbedingte Restwassergehalte nicht zu entfernen, die sich bedingt durch die hygroskopischen Eigenschaften der wasserfreien Alkohole beim Arbeiten an der Luft allmählich wieder einstellen würden.

**Tabelle 2**

| Mischung | Ethanol *(VOM)* | Wasser *(VOM)* | Ethylenglykol *(VOM)* | Glyzerin (Vol%) | Phasengrenze (Wölbung) | Unterlaufverhalten | Viskosität |
|---|---|---|---|---|---|---|---|
| | 90 | 0 | 0 | 10 | stark | sehr gut | niedrig |
| 2 | 90 | 0 | 0 | 10 | stark | sehr gut | niedrig |
| 3 | 80 | 0 | 0 | 20 | stark | sehr gut | niedrig mittel |
| 4 | 50 | 0 | 0 | 50 | sehr stark | sehr gut | mittel hoch |
| 5 | 90 | 0 | 10 | 0 | stark | sehr gut | niedrig |
| 6 | 80 | 0 | 20 | 0 | stark | sehr gut | niedrig |
| 7 | 50 | 0 | 50 | 0 | stark | sehr gut | mittel |
| 8 | 50 | 25 | 0 | 25 | stark | sehr gut | niedrig mittel |
| 9 | 50 | 25 | 25 | 0 | stark | sehr gut | niedrig |
| 10 | 75 | 25 | 0 | 0 | stark | gut | niedrig |
| 11 | 50 | 50 | 0 | 0 | sehr stark | mäßig | niedrig |
| 12 | 100 | 0 | 0 | 0 | stark | sehr gut | niedrig |
| 13 | 0 | 0 | 100 | 0 | stark | mäßig | mittel bis hoch |

| | | | | | | | |
|---|---|---|---|---|---|---|---|
| Thermometerflüssigkeit original TFA (mit Ascorbinsäure) | | | | | | | |

Wurde die Kapillare so in senkrechter Position platziert, daß sich die perfluorierte Flüssigkeit oben und die thermometrische Flüssigkeit unten befindet, so wurde in keinem Fall ein Vorbeilaufen der schwereren an der leichteren Phase beobachtet, wie das bei größeren Röhrchendurchmessern, ganz analog zu Quecksilber, der Fall ist.

### 3. Untersuchungen zur Viskosität geeigneter thermometrischer Flüssigkeiten.

Zur Bestimmung der Viskositäten wurde ein noch nicht gebogenes Kapillarröhrchen mit der jeweiligen thermometrischen Flüssigkeit gefüllt und dann die Zeit gemessen, die ein Originalstäbchen benötigte, um bei senkrechter Position des Röhrchens eine Strecke von 10 cm zu sinken. Diese Messung erfolgte dreimal hintereinander bei Temperaturen um 22°C. Die ermittelten Durchschnittswerte sind als Sinkzeiten in Tabelle 3 festgehalten. Um herstellungsbedingte Toleranzen als Fehlerquelle auszuschließen, wurde für alle Untersuchungen die gleiche Kapillare und das gleiche Stäbchen benutzt.

Nimmt man die Viskositätswerte der Originalthermometerflüssigkeit als Orientierungshilfe für den Bereich praktikabler Viskositäten, so sind neben dem ascorbinsäurefreien Ethanol/Glyzeringemisch mit 10 Vol % Glyzerin, Ethanolgemische mit bis zu 20 Vol % Ethylenglykol und auch reines Ethanol einsetzbar. Höhere Zusätze an Glyzerin oder Ethylenglykol führen zu einem starken Anwachsen der Viskosität.

**Tabelle 3**

| Mischung | Ethanol (Vol%) | Ethylenglykol (Vol%) | Glyzerin (Vol%) | Sinkzeit (sek.) |
|---|---|---|---|---|
| 1 | 90 | 0 | 10 | 6,3 |
| 2 | 90 | 0 | 10 | 6,5 |
| 3 | 80 | 0 | 20 | 11,6 |
| 4 | 50 | 0 | 50 | 93 |
| 5 | 90 | 10 | 0 | 5,1 |
| 6 | 80 | 20 | 0 | 6,9 |
| 7 | 50 | 50 | 0 | 12,5 |
| 12 | 100 | 0 | 0 | 4,2 |
| 13 | 0 | 100 | 0 | 68 |

| | | | | |
|---|---|---|---|---|
| Thermometerflüssigkeit original TFA (mit Ascorbinsäure) | | | | |

Offenbart ist ein kapillares Thermometer mit einer Überträgerflüssigkeit zum Verschieben einer, eine maximale oder minimale Temperatur anzeigenden Marke, und mit einer thermometrischen Flüssigkeit, in der die Marke angeordnet ist, wobei die Überträgerflüssigkeit hydrophob und hochfluoriert ist.

### Bezugszeichenliste

- 2: Thermometer
- 4: Kapillarrohr
- 6: linker Schenkel
- 8: rechter Schenkel
- 10: thermometrische Flüssigkeit
- 12: Marker
- 14: Marker
- 16: Überträgerflüssigkeit
- 18: Phasengrenzfläche
- 20: Phasengrenzfläche
- 22: Vorratsbehälter
- 24: Ausgleichsbehälter
- 26: Temperaturskala
- 28: Temperaturskala

## Patentansprüche

1. Kapillares Thermometer mit einer Überträgerflüssigkeit (16) zum Verschieben einer eine maximale oder minimale Temperatur anzeigenden Marke (12, 14), und mit einer thermometrischen Flüssigkeit (10), in der die Marke (12, 14) angeordnet ist, **dadurch gekennzeichnet, daß** die Überträgerflüssigkeit (16) eine hydrophobe hochfluorierte Verbindung ist.

2. Thermometer nach Anspruch 1, wobei die Überträgerflüssigkeit (16) perfluoriert ist.

3. Thermometer nach Anspruch 2, wobei die Überträgerflüssigkeit (16) eine einzelne Verbindung oder eine Mischung der Verbindungen Perfluor Tri n-Butylamin ist, Perfluor Tri n-Pentylamin, Perfluor Tri n-Butylamin und/oder Perfluor Di n-Butylmethylamin ist.

4. Thermometer nach einem der vorhergehenden Ansprüche, wobei die thermometrische Flüssigkeit (10) aus einer oder mehreren der Gruppen Ethanol, Ethylenglykol, Glyzerin und/oder Wasser ausgewählt ist.

5. Thermometer nach Anspruch 4, wobei die thermometrische Flüssigkeit (10) eine Ethanol/Glyzerinmischung mit etwa 10 Volumenprozent Glyzerin ist.

6. Thermometer nach Anspruch 4, wobei die thermometrische Flüssigkeit (10) eine Ethanol/Ethylenglykolmischung mit bis zu 20 Volumenprozent Ethylenglykol ist.

7. Thermometer nach Anspruch 4, wobei die thermometrische Flüssigkeit (10) reines Ethanol ist.

8. Thermometer nach einem der vorhergehenden Ansprüche, wobei ein u-förmiges Kapillarrohr (4) mit zwei Schenkeln (6, 8) zur Aufnahme der Flüssigkeiten (10, 16) vorgesehen ist und die thermometrische Flüssigkeit (10) mit jeweils einer Marke (12, 14) beidseitig der Überträgerflüssigkeit (16) angeordnet ist.

## Claims

1. Capillary thermometer having a transfer liquid (16) for displacing a mark (12, 14) indicating a maximum or minimum temperature, and having a thermometric liquid (10) in which the mark (12, 14) is situated, **characterised in that** the transfer liquid (16) is a hydrophobic highly fluorinated compound.

2. Thermometer according to claim 1, wherein the transfer liquid (16) is perfluorinated.

3. Thermometer according to claim 2, wherein the transfer liquid (16) is a single compound or a mixture of the compounds perfluorotri-n-butylamine, is perfluorotri-n-pentylamine, perfluorotri-n-butylamine and/or perfluorodi-n-butylmethylamine.

4. Thermometer according to any one of the preceding claims, wherein the thermometric liquid (10) is selected from one or more of the groups ethanol, ethylene glycol, glycerol and/or water.

5. Thermometer according to claim 4, wherein the thermometric liquid (10) is an ethanol/glycerol mixture comprising approximately 10% by volume glycerol.

6. Thermometer according to claim 4, wherein the thermometric liquid (10) is an ethanol/ethylene glycol mixture comprising up to 20% by volume ethylene glycol.

7. Thermometer according to claim 4, wherein the thermometric liquid (10) is pure ethanol.

8. Thermometer according to any one of the preceding claims, wherein a U-shaped capillary tube (4) having two limbs (6, 8) is provided for holding the liquids (10, 16) and the thermometric liquid (10) is situated with a mark (12, 14) one on each side of the transfer liquid (16).

## Revendications

1. Thermomètre capillaire, avec un liquide de transfert (16) pour déplacer une marque (12, 14) affichant une température maximale ou minimale, et avec un liquide thermométrique (10), dans lequel la marque (12, 14) est disposée, **caractérisé en ce que** le liquide de transfert (16) est un composé hautement fluoré hydrophobe.

2. Thermomètre selon la revendication 1, **caractérisé en ce que** le liquide de transfert (16) est perfluoré.

3. Thermomètre selon la revendication 2, **caractérisé en ce que** le liquide de transfert (16) est un composé individuel, ou un mélange des composés que sont les perfluor tri n-butylamine, perfluor tri n-pentylamine, perfluor tri n-butylamine et/ou perfluor di n-butylméthylamine.

4. Thermomètre selon l'une des revendications précédentes, **caractérisé en ce que** le liquide thermométrique (10) est sélectionné parmi un ou plusieurs de groupes que sont l'éthanol, l'éthylène glycol, la glycérine et/ou l'eau.

5. Thermomètre selon la revendication 4, **caractérisé en ce que** le liquide thermométrique (10) est un mélange éthanol/glycérine, contenant à peu près 10 pourcents en volume de glycérine.

6. Thermomètre selon la revendication 4, **caractérisé en ce que** le liquide thermométrique (10) est un mélange éthanol/éthylène glycol, contenant jusqu'à 20 pourcents en volume d'éthylène glycol.

7. Thermomètre selon la revendication 4, dans lequel le liquide thermométrique (10) est de l'éthanol pur.

8. Thermomètre selon l'une des revendications précédentes, dans lequel un tube capillaire (4) en forme de U, comprenant deux branches (6, 8) pour recevoir les liquides (10, 16), est prévu, et le liquide thermométrique (10) est disposé, avec chaque fois une marque (12, 14), de part et d'autre du liquide de transfert (16).
